(19) Europäisches Patentamt

European Patent Office

Office européen des brevets

(11) **EP 1 089 198 A2**

(12) **EUROPEAN PATENT APPLICATION**

(43) Date of publication:
04.04.2001 Bulletin 2001/14

(51) Int. Cl.$^7$: **G06F 17/30**

(21) Application number: 00307874.8

(22) Date of filing: 12.09.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 30.09.1999 US 409470

(71) Applicant:
**Hewlett-Packard Company
Palo Alto, California 94304-1112 (US)**

(72) Inventor: **Wong, Ping Wah
Sunnyvale, California 94087 (US)**

(74) Representative:
**Jehan, Robert et al
Williams, Powell & Associates,
4 St Paul's Churchyard
London EC4M 8AY (GB)**

(54) **Content-based image searching**

(57)     A hierarchical method derives a content-based image tree from a database (52) set of multiple images, each image having an associated feature metric. The method partitions the set of multiple images into a first subset and a second subset by allocating images to each subset whose feature metrics are closer to a feature metric of a seed image in each respective subset (step 36); selects for each subset a comparison image whose feature metric is representative of feature metrics of images partitioned into the respective subsets (step 40); and recursively repeats the above steps for each subset, subsets of each subset, etc. to create a tree of partitioned subsets of images (step 42). The method then enables a search based on the comparison images.

FIG.4

Printed by Xerox (UK) Business Services
2.16.7 (HRS)/3.6

**Description**

This invention relates to hierarchical methods for content-based image searching, for example a method for arranging a hierarchical image search tree that substantially improves the speed of a search, and hence makes practical the searching of databases that include millions of images.

It is well known that the search of an image database for a match to a base search image can consume large amounts of processing time, especially when the image database is large. Under certain circumstances, the search becomes impractical due to the length of search time.

The objective of a content-based image search problem can be described as follows. Given a base search image and a collection of n images, assume that it is desired to search over the collection of images and return the top k matches (k<=n) in rank ordering. The closeness of the match is determined using a metric calculated from the image features. In practice, it is often desired to keep k a constant that is independent of n. This is due, for example, to the requirement that a finite storage buffer size be used to store the results of the search.

A prior art of method for solving the image search problem has been to compare each image in the database to the search image, using an image feature-based metric; select the top k matches; rank order them; and return the result to the user. This is called a "full search" (or "exhaustive search") approach. The complexity of a full search is the complexity of comparing the search image to the images in the database and rank ordering the top k matches.

The complexity of the feature comparison step for a full search is linearly proportional to n. That is, there is a need to compute the distances $d(x,y_i)$ between the search image x and each image in the database $y_i$ for i=1,2,...,n. The complexity of rank ordering the top k images from a set of n images (with k being a constant independent of n) is also linearly proportional to n. Hence the overall complexity of full search is linearly proportional to n---the number of images in the collection. Thus, for a practical system with potentially millions of images in the database, the full search approach does not scale well due to the linear dependence between the search time and the number of images.

U. S. Patent 5,734,893 to Li et al. discloses a method for minimizing the time required to obtain results from a content based query search. The database is partitioned into a plurality of groups. Then a schedule or sequence of groups is assigned to each of the operations of the query, where the schedule represents the order in which an operation of the query will be assigned to the groups in the schedule. Each schedule is arranged so that each application of the operation operates on the group that will yield intermediate results that are closest to final results.

U. S. Patent 5,751,286 to Barber et al. describes a system where images in a database are searched in response to queries that include visual characteristics of the images, such as colors, textures, shapes and sizes, as well as by textual tags appended to the images. Queries are constructed in an image query area in response to values representing the visual image characteristics and to locations of the representations in the image query area.

U. S. Patents 5,893,095, 5,911,139, 5,913,205 and 5,915,250, all to Jain et al., describe further methods for a content-based search and retrieval of visual objects from a database.

The present invention seeks to provide improved image searching.

According to an aspect of the present invention, there is provided a hierarchical method of deriving a content based image tree from a database as specified in claim 1.

According to another aspect of the present invention, there is provided a memory medium as specified in claim 6.

A preferred method can partition a database of images to enable more efficient searches thereof and/or can provide an improved search method for searching a partitioned image database.

A preferred hierarchical method derives a content-based image tree from a database set of multiple images, each image having an associated feature metric. The method partitions the set of multiple images into a first subset and a second subset by allocating images to each subset whose feature metrics are closer to a feature metric of a seed image in each respective subset; selects for each subset a comparison image whose feature metric is representative of feature metrics of images partitioned into the respective subsets; and recursively repeats the above steps for each subset, subsets of each subset, etc. to create a tree of partitioned subsets of images. The method then enables a search based on the comparison images.

The method preferably compares a feature metric associated with a base search image, with feature metrics associated with comparison images in the first and second subsets, and selects either the first subset or the second subset, depending on which feature metric associated with a comparison image in a respective subset is closer to the feature metric associated with the search image; and repeats the comparing action with respect to subsets that extend from the selected subset down the tree of subsets until a lowest subset of the tree is reached.

An embodiment of the present invention is described below, by way of example only, with reference to the accompanying drawings, in which:

Figure 1 is a schematic indicating a first partitioning method;

Figure 2 is a schematic diagram of another embodiment of partitioning method;

Figs 3a-3b comprise a logic flow diagram of the preferred method;

Fig. 4 is a block diagram of a hierarchical image search system; and

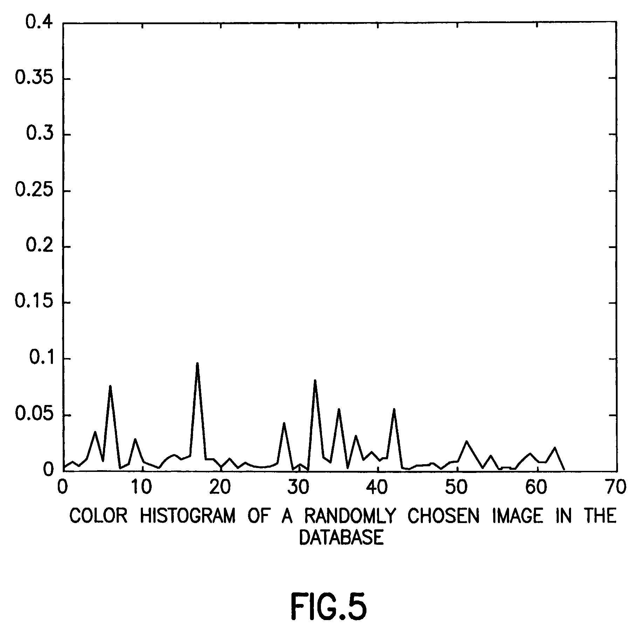

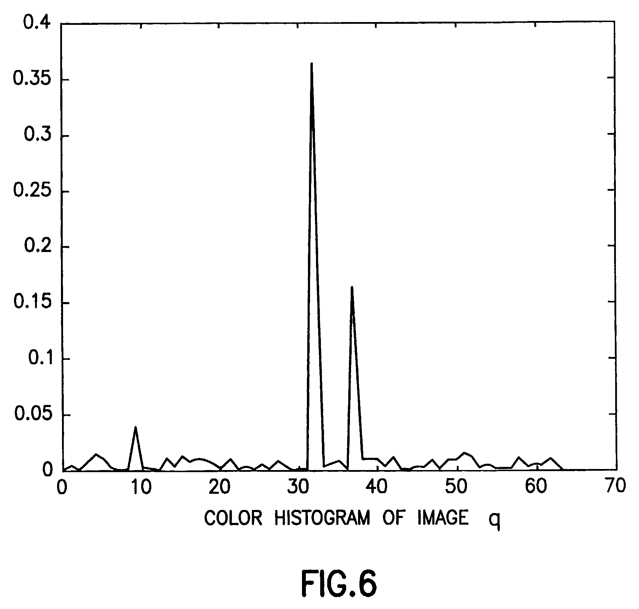

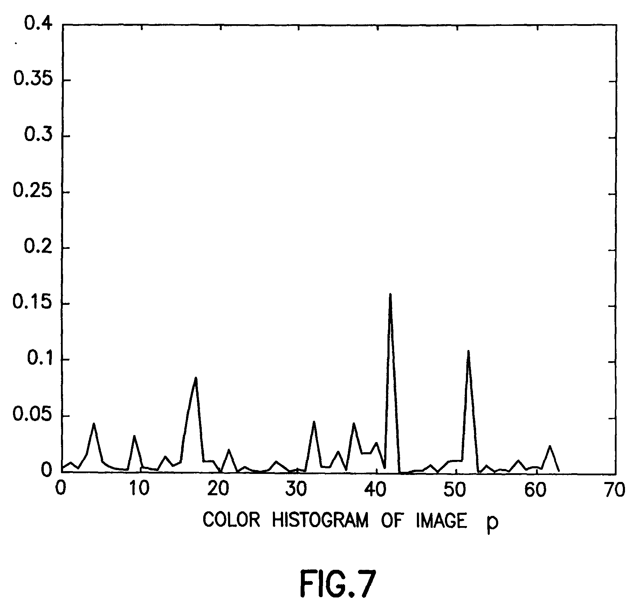

Figs. 5-7 are histograms of images from which feature metrics are derived for the respective images.

The embodiment of method described below partitions a collection of n images of a database into two equal sized subsets, each comprising n/2 images.

A condition that is enforced during the partitioning is that all of the images in a same subset are close to each other (as determined by image feature metrics associated with the images).

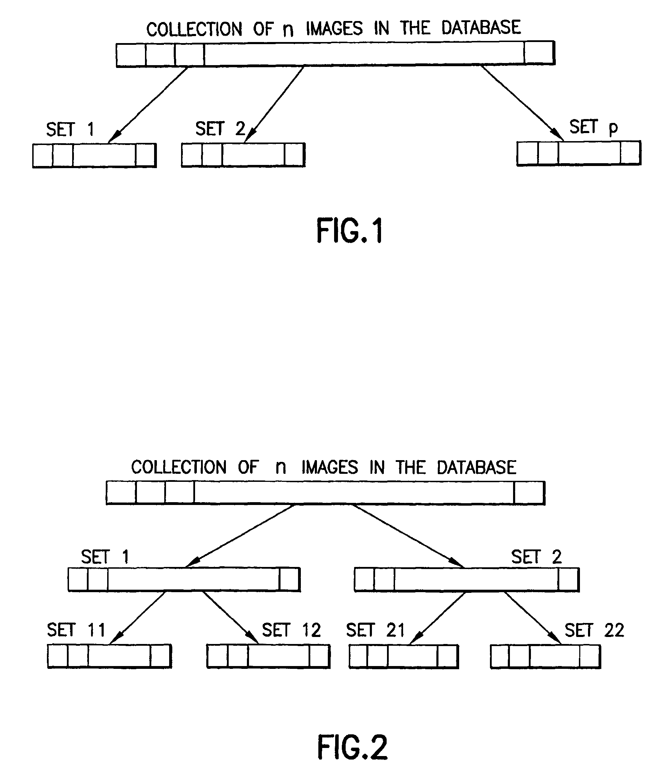

When a base search image is provided that is to be matched to an image in the database, it is first determined from which subset the search is to commence. If there is only one subset, as indicated in Fig. 1, the search is made over the subset and the results are returned. The complexity of this search is linearly proportional to 2+n/2; the first 2 represents the effort to decide on which subset to search, and n/2 represents the effort to search the subset of n/2 images. Although the complexity is still linearly proportional to n, it represents a reduction approximately by a factor of 2 compared to a full search. The cost is that the images need to be partitioned before the searching can start.

The partitioning method can be extended to include p clusters as shown in Fig. 1. The images are partitioned into p subsets of n/p images each. The condition is enforced that images within each subset are close to each other as measured by an image feature based metric. The complexity of this clustering scheme is proportional to $p+(n/p)$. Hence the optimum (minimum) complexity is proportional to $n^{1/2}$, which is achieved by setting $p=n^{1/2}$.

To extend the concept of Fig.1, the partitioning action is recursively applied to the subsets generated in each step. Again, during each partitioning step, the condition is enforced that the images within each subset are close to each other as measured by their image feature based metrics. In this way, a hierarchical tree is built. Fig. 2 shows a hierarchical tree with two levels of partitioning. In general, there can be m levels of recursive partitioning. The maximum number of levels m for a collection of n images is $\log_2 n$.

To perform a search, a base search image is provided and the object is to find the closest matches. Using the partition in Fig. 2 as an example, the search image is compared with a representative image in each of sets 1 and 2. If the image in set 1 is a closer match than the one in set 2, set 2 is discarded. The search then moves to the next level and compares the search image with a representative image in each of set 11 and set 12 to decide which set is to be followed. This procedure is recursively applied until the bottom of the tree is reached. At such point a small subset of images has been found that are all reasonably close matches to the search image. This small subset can then be individually examined and a ranking thereof returned.

In order to establish the hierarchical tree of this embodiment, the images in the database are analyzed so as to rate each image in accordance with one or more image feature metric(s). One or more common image feature(s) is/are used for all images, and each image is analyzed to derive metric(s) for its respective feature(s). While many features may be considered, the following is a list of preferred features from which one or more can be chosen as the common feature(s):

1. Color Histogram: measures the distribution of color within the image. Uses a set of predefined colors and then quantizes the color value of each pixel so that it falls into one of a set of predefined color bins. Then the count of pixels in each bin is associated with the image as the image feature metric.

2. Color Moments: measures the mean and standard deviations of each primary color component (R, G and B) in the respective image. The mean gives the average intensity and the standard deviation gives the average spread, both of which are associated with the respective image as the image feature metric.

3. Color Coherence: measures the spatial distribution of colors in the image. For example, whether an image consists of a single large red region or includes a large number of scattered red pixels, etc.

4. Texture: measures the texture in an image by how predictable each pixel is from its surroundings. More specifically, a metric is determined that indicates the spatial rapidity of color changes in the image.

5. Coarseness: measures the grain size of the textures in the image. First smoothes the image, then finds values indicative of the maximum gradients in the horizontal and vertical directions.

6. Directionality: measures the direction of the structures of the image. For example, whether there is any directional component in the textures in the image (e.g., whether stripes present in an image are horizontal or vertical, etc.).

Hereafter it will be assumed that a color histogram is derived for each image as the image feature metric. Exemplary image histograms are shown in Figs.

5-7. A feature metric for an image can be derived from a histogram by associating with the respective image, the wavelength values of the histogram peaks whose magnitudes exceed a threshold and the respective histogram peak magnitude values. Such value(s) provide a color distribution (and intensity) feature metric for the image.

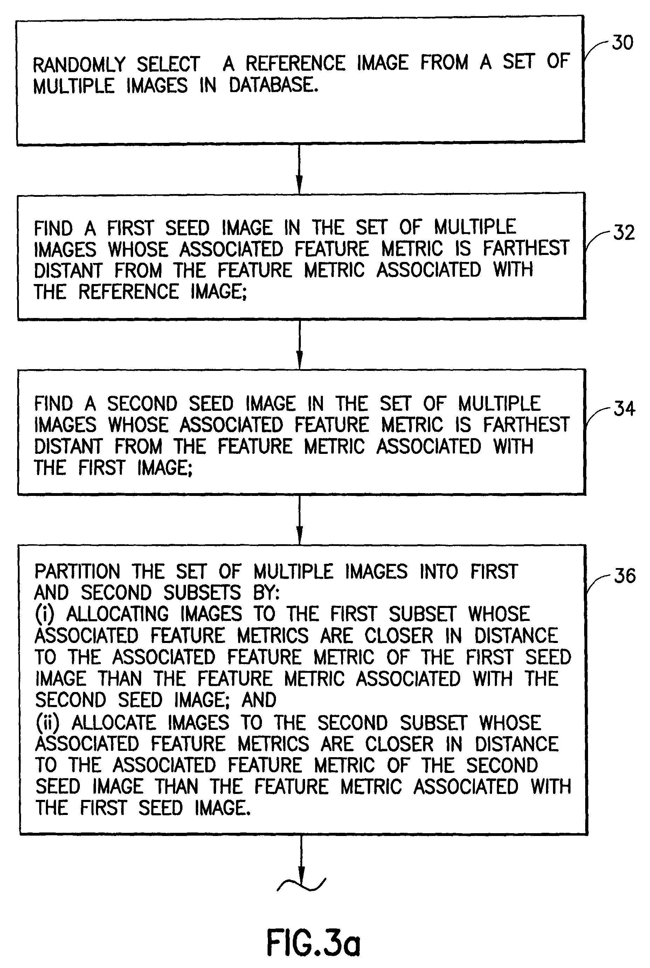

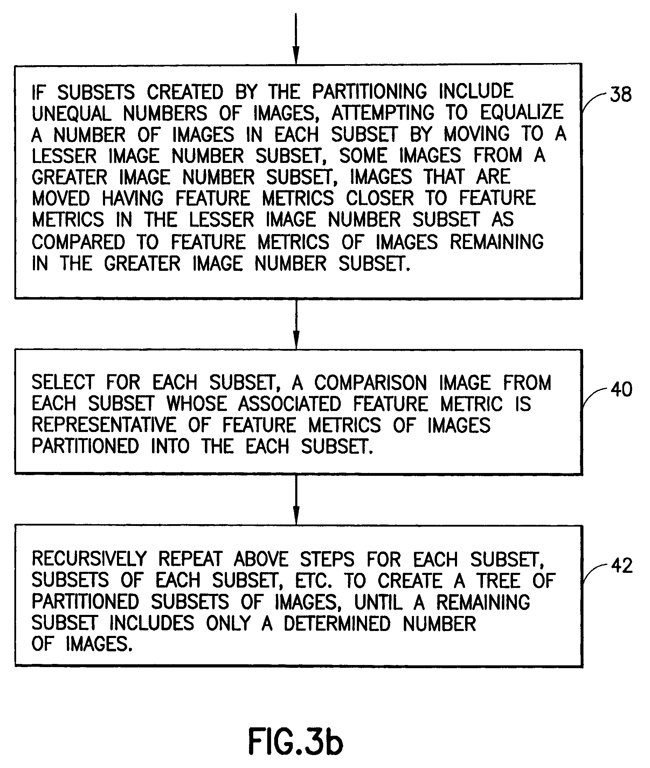

To construct the hierarchical tree of Fig. 2, a partitioning step is applied to split the collection of images into two subsets so that the images within each subset are close to each other. A non-iterative recursive method that can produce a good partition is shown in Figs 3a and 3b.

PARTITIONING

Given a database of images that have been analyzed to assign feature metrics to each image, a reference image is randomly selected from the set of images in the database (step 30). Then a first seed image is found in the set of multiple images whose associated feature metric is farthest distant from the feature metric associated with the reference image (step 32). Next, a second seed image is found in the set of multiple images whose associated feature metric is farthest distant from the feature metric associated with the first image (step 34).

Now, the set of multiple images is partitioned into first and second subsets by: (i) allocating images to the first subset whose associated feature metrics are closer in distance to the associated feature metric of the first seed image than the feature metric associated with the second seed image; and (ii) allocating images to the second subset whose associated feature metrics are closer in distance to the associated feature metric of the second seed image than the feature metric associated with the first seed image (step 36).

If the subsets created by the partitioning include unequal numbers of images, an attempt is made to equalize the number of images in each subset by moving to a lesser image number subset, some images from a greater image number subset. Images that are moved have feature metrics closer to feature metrics in the lesser image number subset, as compared to feature metrics of images remaining in the greater image number subset (step 38).

Next, for each subset, a comparison image is selected from each subset whose feature metric is representative of feature metrics of images partitioned into each subset (step 40). Thereafter, steps 30-40 are recursively repeated for each subset, subsets of each subset, etc. to create a tree of partitioned subsets of images, until a remaining subset includes only a determined number of images (step 42).

A more detailed description of the preferred partitioning method follows.

a) Let d(a,b) be the distance between images a and b as measured using image content feature vectors. The image database is partitioned by recursively applying a set of procedures which will partition a set of images into two subsets, where the images within each subset are close to each other as measured by a distance d(). Given a set of images $x_1$, $x_2$, ..., $x_n$, proceed as follows.

b) Randomly select an image from the set and call it y.

c) Go through the set and find an image that is the farthest away from y as measured by d(). Let this image be p. That is d(p,y)>=d(x,y) for any image x in the set.

d) Go through the set and find an image that is the farthest away from p as measured by d(). Let this image be q. That is, d(q,p)>=d(x,p) for any image x in the set.

e) Use the images p and q as seed images, partition the set into two subsets P and Q according to whether an image is closer to p or to q. All the images in set P are closer to p than to q, and all the images in set Q are closer to q than to p.

f) If the size of sets P and Q are equal, then stop. Otherwise, if there are more images in set P than in set Q. Then move some images from set P to set Q, starting with those images in P that are closest to Q, until the sizes of P and Q are equal. If there are more images in Q than in P, move images from Q to P similarly.

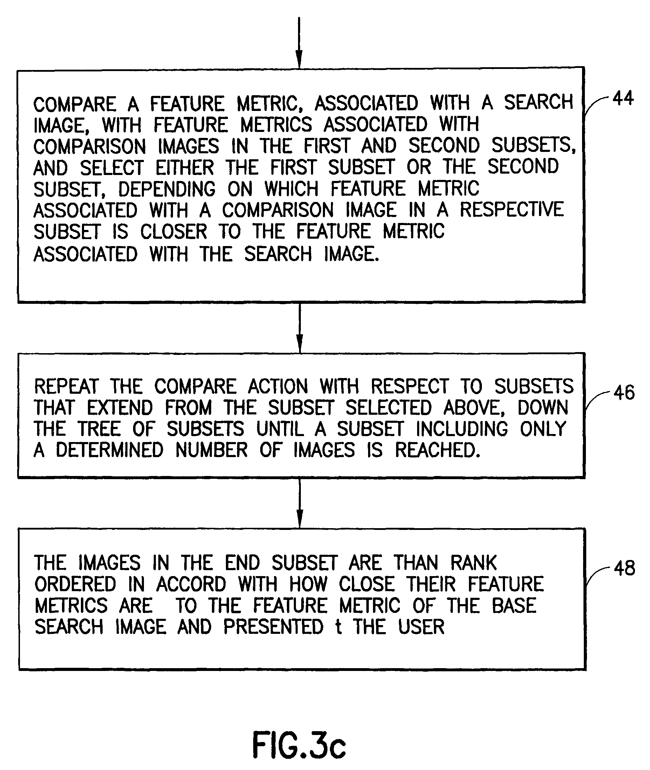

Once the images of the database have been partitioned, a search may proceed to identify a subset of images that most closely match a base search image. The search proceeds as shown in Fig. 3c as follows.

SEARCH

A feature metric, associated with a base search image is compared with feature metrics associated with comparison images in the first and second subsets, and either the first subset or the second subset is selected, depending on which feature metric associated with a comparison image is closer to the feature metric associated with the base search image (step 44).

The compare action is then repeated with respect to subsets that extend from the subset selected above, down the tree of subsets until an end subset including only determined number of images is reached (step 46). Thereafter, the images in the end subset are rank ordered in accordance with how close their feature metrics are to the feature metric of the base search image (step 48). The images are then presented to the user

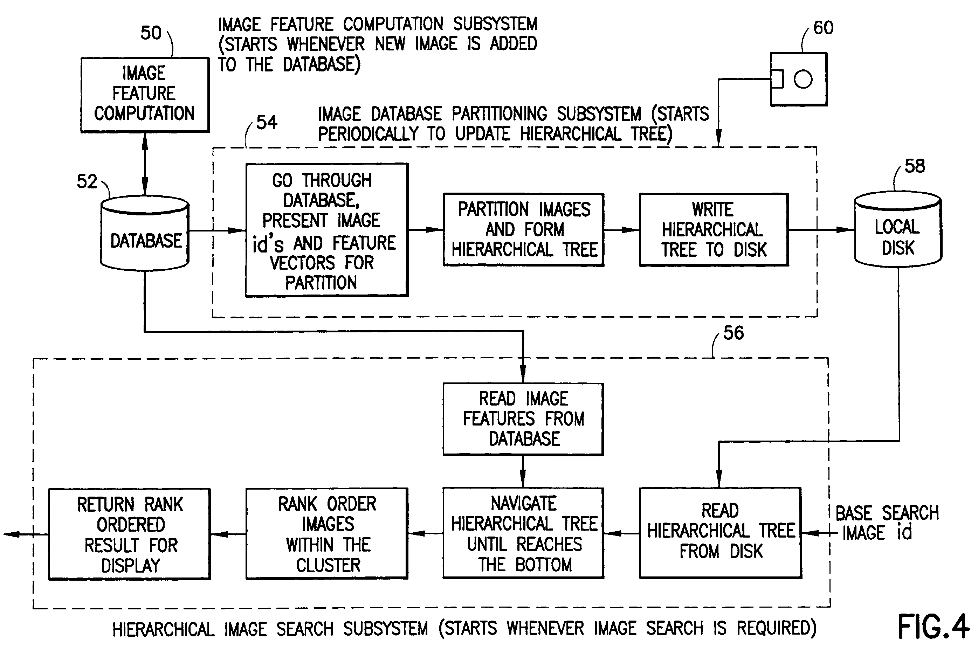

A block diagram of the hierarchical image search system is shown in Fig. 4. The overall system comprises three main subsystems:

a) an image feature computation subsystem 50 that pre-computes the image feature metric values for all the images, and stores them in database 52;
b) an image database partitioning subsystem 54 that builds the hierarchical tree from the image database 52; and
c) a hierarchical image search subsystem 56 that performs an image search using the hierarchical tree.

The objective of the image database partitioning application is to produce a hierarchical tree based on the characteristics of the images in the database. On the input side, the system interfaces with database 52 to obtain a list of images. It also accesses all the pre-computed image feature metrics. Partitioning subsystem 54 partitions the images and builds a hierarchical tree. The hierarchical tree is written to disk 58 that will later be accessed by hierarchical image search subsystem 56. The image database partitioning subsystem 54 is started periodically to update the hierarchical tree so that the new additions to the image database are accounted for.

Hierarchical image search subsystem 56 is invoked by the user whenever an image search is to be performed. Specifically, it reads the hierarchical tree from disk 58 and then uses this information, as well as the image feature metrics, to traverse down the tree until it arrives at a leaf of the tree. The leaf represents a subset of images that are all close to each other and are relatively close to the base search image. The subset of images is then searched and ranked to return the list of top matches to the user.

The efficiency of the above described embodiment can be appreciated from the following example. Consider the case where it is desired to search a database of n images and to return the top k matches to a base search image, where k is independent of n. The complexity of a usual full search scheme is linearly proportional to n. Thus if n is large, the complexity of the search is large. If the partitioning method of described above is used, the search complexity is reduced and the resulting complexity, with an m-level hierarchical tree is $2m+(n/2^m)$. Given a database with 16 million images ($n=16\times10^6$), the number of feature comparisons using (i) an exhaustive search, (ii) optimum partitioning and (iii) a 16-level hierarchical tree are $16\times10^6$, $8\times10^3$ and 288, respectively.

It should be understood that the foregoing description is only illustrative and that various alternatives and modifications can be devised by those skilled in the art without departing from the invention. For example, the software/firmware required to implement the method may be resident on one or more memory devices 60 (Fig. 4) for loading on an as-needed basis. Accordingly, the present invention is intended to embrace all such alternatives, modifications and variances which fall within the scope of the appended claims.

The disclosures in United States patent application no. 09/409,470, from which this application claims priority, and in the abstract accompanying this application are incorporated herein by reference.

**Claims**

1. A hierarchical method of deriving a content-based image tree from a database (52) set of multiple images, each image having an associated feature metric, the method including the steps of:

a) partitioning the set of multiple images into a first subset and a second subset by allocating images to each subset whose feature metrics are closer to a feature metric of a speed image in each respective subset (step 36);
b) selecting for each subset a comparison image from each subset whose feature metric is representative of feature metrics of images partitioned into the each subset (step 40); and
c) recursively repeating steps a) and b) for each subset, subsets of each subset and so on, to create a tree of partitioned subsets of images, until a remaining subset includes a determined number of images (step 42).

2. A method as in claim 1, wherein partitioning step a) comprises the substeps of:

a1) randomly selecting a reference image from the set of images (step 30);
a2) finding a first seed image in the set of multiple images whose associated feature metric is most distant from a feature metric associated with the reference image and assigning it to a first subset (step 32); and
a3) finding a second seed image in the set of multiple images whose associated feature metric is most distant from the feature metric associated with the first image and assigning it to a second subset (step 34).

3. A method as in claim 1 or 2, including the steps of:

d) comparing a feature metric of a search image with feature metrics of comparison images in the first and second subsets and selecting either the first subset or the second subset depending on which feature metric of a comparison image in a respective subset is closer to the feature metric of the search image (step 44); and

e) recursively repeating comparing step d) with respect to subsets that extend from the subset selected in step d) down the tree of subsets until a subset with a determined number of images is reached (step 46).

4. A method as in claim 1, 2 or 3, wherein step a) includes the subset of:

a1) if subsets created by the partitioning include unequal numbers of images, attempting to equalise a number of images in each subset by moving to a lesser image number subset, some images from a greater image number subset, images that are moved having feature metrics closer to feature metrics in the lesser image number subset as compared to feature metrics of images remaining in the greater image number subset (step 38).

5. A method as in any preceding claim, wherein the feature metric is dependent on one or more values derived from: at least one of a metric of color distribution in each image; a mean and a standard deviation of each primary color component in each image; a spatial distribution of one or more colors in each image; a metric of spatial rapidity of color changes in each image; a metric of color grain sizes in each image; and a metric of directional components of each image.

6. A memory medium (60) including instructions for controlling a processor to perform a hierarchical method to deriving a content-based image tree from a database set of multiple images, each image having a feature metric, the memory medium including:

a) means for controlling the processor to partition the set of multiple images into a first subset and a second subset by allocating images to each subset whose feature metrics are closer to a feature metric of a seed image in each respective subset;
b) means for controlling the processor to select for each subset a comparison image from the each subset whose feature metric is representative of feature metrics of images partitioned into each subset; and
c) means for controlling the processor to operate recursively means a) and b) for each subset, subsets of each subset and so on, to crate a tree of partitioned subsets of images, until a remaining subset includes a determined number of images.

7. A memory medium as in claim 6, wherein means a) includes:

a1) means for controlling the processor to select randomly a reference image from the set of multiple images;
a2) means for controlling the processor to find a first seed image in the set of multiple images whose feature metric is most distant from the feature metric of the reference image and assigning it to a first subset; and
a3) means for controlling the processor to find a second seed image in the set of multiple images whose feature metric is most distant from the feature metric of the first image and assigning it to a second subset.

8. A memory medium as in claim 6 or 7, comprising:

d) means for controlling the processor to compare a feature metric of a base search image with feature metrics of comparison images in the first and second subsets and to select either the first subset or the second subset depending on which feature metric of a comparison image in a respective subset is closer to the feature metric of the base search image; and
e) means for controlling the processor to repeat the compare action with respect to subsets that extend from the subset selected in step d) down the tree of subsets until a subset including only a determined number of images is reached.

9. A memory medium as in claim 6, 7 or 8, wherein means a) is operable to control the processor to attempt to equalize the number of images in each subset if subsets created by the partitioning include unequal numbers of images, by moving to a lesser image number subset, some images from a greater image number subset, images that are moved having feature metrics closer to feature metrics in the lesser image number subset as compared to feature metrics of images remaining in the greater image number subset.

10. A memory medium as in claim 6, 7, 8 or 9, wherein the feature metric is dependent on one or more values derived from: at least one of a metric of color distribution in each image; a mean and a standard deviation of each primary color component in each image; a spatial distribution of one or more colors in each image; a metric of spatial rapidity of color changes in each image; a metric of color grain sizes in each image; and a metric of directional components of each image.

COLLECTION OF n IMAGES IN THE DATABASE

SET 1

SET 2

SET p

FIG.1

COLLECTION OF n IMAGES IN THE DATABASE

SET 1

SET 2

SET 11

SET 12

SET 21

SET 22

FIG.2

RANDOMLY SELECT A REFERENCE IMAGE FROM A SET OF MULTIPLE IMAGES IN DATABASE.

— 30

FIND A FIRST SEED IMAGE IN THE SET OF MULTIPLE IMAGES WHOSE ASSOCIATED FEATURE METRIC IS FARTHEST DISTANT FROM THE FEATURE METRIC ASSOCIATED WITH THE REFERENCE IMAGE;

— 32

FIND A SECOND SEED IMAGE IN THE SET OF MULTIPLE IMAGES WHOSE ASSOCIATED FEATURE METRIC IS FARTHEST DISTANT FROM THE FEATURE METRIC ASSOCIATED WITH THE FIRST IMAGE;

— 34

PARTITION THE SET OF MULTIPLE IMAGES INTO FIRST AND SECOND SUBSETS BY:
(i) ALLOCATING IMAGES TO THE FIRST SUBSET WHOSE ASSOCIATED FEATURE METRICS ARE CLOSER IN DISTANCE TO THE ASSOCIATED FEATURE METRIC OF THE FIRST SEED IMAGE THAN THE FEATURE METRIC ASSOCIATED WITH THE SECOND SEED IMAGE; AND
(ii) ALLOCATE IMAGES TO THE SECOND SUBSET WHOSE ASSOCIATED FEATURE METRICS ARE CLOSER IN DISTANCE TO THE ASSOCIATED FEATURE METRIC OF THE SECOND SEED IMAGE THAN THE FEATURE METRIC ASSOCIATED WITH THE FIRST SEED IMAGE.

— 36

FIG.3a

IF SUBSETS CREATED BY THE PARTITIONING INCLUDE UNEQUAL NUMBERS OF IMAGES, ATTEMPTING TO EQUALIZE A NUMBER OF IMAGES IN EACH SUBSET BY MOVING TO A LESSER IMAGE NUMBER SUBSET, SOME IMAGES FROM A GREATER IMAGE NUMBER SUBSET, IMAGES THAT ARE MOVED HAVING FEATURE METRICS CLOSER TO FEATURE METRICS IN THE LESSER IMAGE NUMBER SUBSET AS COMPARED TO FEATURE METRICS OF IMAGES REMAINING IN THE GREATER IMAGE NUMBER SUBSET. — 38

SELECT FOR EACH SUBSET, A COMPARISON IMAGE FROM EACH SUBSET WHOSE ASSOCIATED FEATURE METRIC IS REPRESENTATIVE OF FEATURE METRICS OF IMAGES PARTITIONED INTO THE EACH SUBSET. — 40

RECURSIVELY REPEAT ABOVE STEPS FOR EACH SUBSET, SUBSETS OF EACH SUBSET, ETC. TO CREATE A TREE OF PARTITIONED SUBSETS OF IMAGES, UNTIL A REMAINING SUBSET INCLUDES ONLY A DETERMINED NUMBER OF IMAGES. — 42

# FIG.3b

COMPARE A FEATURE METRIC, ASSOCIATED WITH A SEARCH IMAGE, WITH FEATURE METRICS ASSOCIATED WITH COMPARISON IMAGES IN THE FIRST AND SECOND SUBSETS, AND SELECT EITHER THE FIRST SUBSET OR THE SECOND SUBSET, DEPENDING ON WHICH FEATURE METRIC ASSOCIATED WITH A COMPARISON IMAGE IN A RESPECTIVE SUBSET IS CLOSER TO THE FEATURE METRIC ASSOCIATED WITH THE SEARCH IMAGE. — 44

REPEAT THE COMPARE ACTION WITH RESPECT TO SUBSETS THAT EXTEND FROM THE SUBSET SELECTED ABOVE, DOWN THE TREE OF SUBSETS UNTIL A SUBSET INCLUDING ONLY A DETERMINED NUMBER OF IMAGES IS REACHED. — 46

THE IMAGES IN THE END SUBSET ARE THAN RANK ORDERED IN ACCORD WITH HOW CLOSE THEIR FEATURE METRICS ARE  TO THE FEATURE METRIC OF THE BASE SEARCH IMAGE AND PRESENTED t THE USER — 48

FIG.3c

IMAGE FEATURE COMPUTATION SUBSYSTEM
(STARTS WHENEVER NEW IMAGE IS ADDED
TO THE DATABASE)

50

IMAGE
FEATURE
COMPUTATION

60

54   IMAGE DATABASE PARTITIONING SUBSYSTEM (STARTS
PERIODICALLY TO UPDATE HIERARCHICAL TREE)

52

DATABASE

GO THROUGH
DATABASE,
PRESENT IMAGE
id's AND FEATURE
VECTORS FOR
PARTITION

PARTITION IMAGES
AND FORM
HIERARCHICAL TREE

WRITE
HIERARCHICAL
TREE TO DISK

58

LOCAL
DISK

56

READ IMAGE
FEATURES FROM
DATABASE

RETURN RANK
ORDERED
RESULT FOR
DISPLAY

RANK ORDER
IMAGES
WITHIN THE
CLUSTER

NAVIGATE
HIERARCHICAL TREE
UNTIL REACHES
THE BOTTOM

READ
HIERARCHICAL TREE
FROM DISK

BASE SEARCH
IMAGE id

HIERARCHICAL IMAGE SEARCH SUBSYSTEM (STARTS WHENEVER IMAGE SEARCH IS REQUIRED)

FIG.4

EP 1 089 198 A2

COLOR HISTOGRAM OF A RANDOMLY CHOSEN IMAGE IN THE DATABASE

FIG.5

COLOR HISTOGRAM OF IMAGE q

FIG.6

COLOR HISTOGRAM OF IMAGE p

FIG.7